# EUROPEAN PATENT APPLICATION

(11) **EP 0 795 732 A2**
(43) Date of publication of application: **17.09.1997**
(21) Application number: 97301713.0
(22) Date of filing: 13.03.1997
(51) Int. Cl.: F28F 21/08

(54) **Heat transfer apparatus**

(30) Priority: 16.03.1996 GB 9605578
(71) Applicant: Regent Heat Transfer Limited, Sleaford, Lincolnshire NG34 0QP (GB)
(72) Inventor: Beasant, Norman C. A., Regent Heat Transfer Ltd., Sleaford, Lincolnshire, NG34 0QP (GB); Payne, Michael, c/o Regent Heat Transfer Ltd., Sleaford, Lincolnshire, NG34 0QP (GB)
(74) Representative: Skinner, Michael Paul

(57) **Abstract**

A heat transfer apparatus has a plurality of parallel tubes 10 between an inlet manifold 12 and an outlet manifold 14. The tubes 10 locate in fins 16 in the form of plates which extend transversely to the tube axes. The tubes are circular and contain a wire loop turbulator to prevent laminar flow within the tubes.

The tubes 10, rods 24, wires 22, fins 16 and manifolds 12,14 are all aluminium and held together by molecular bonding formed by fusing aluminium in a single brazing operation. This enhances heat flow through the exchanger.

## Description

This invention relates to heat transfer apparatus and particularly apparatus for cooling oil in high pressure applications, e.g. for cooling oil, such as hydraulic oil, in off-road machinery such as earth movers and tractors.

Heat exchangers for such high pressure applications are conventionally formed of steel tubes having a circular cross-section in order to contain the internal pressure. An internal tube arrangement, known as a turbulator, physically prevents laminar flow of the oil within the tube. The turbulator may be formed from copper wire wound onto a steel or brass rod. Loops of copper are formed externally on the tube to assist in transfer of heat from the tube to a second fluid, usually air. Components are attached by soldering. Such a heat exchanger is relatively expensive to manufacture and is heavy, because of the materials involved and the various soldering operations required.

A more lightweight material has been used for low pressure applications (pressures below about 7 bar, 7 x 10⁵ Pa), in arrangements with and without an internal turbulator, and with tubes which are not circular. While such a tube can function with low pressure oil, such lightweight exchangers are known to fail, primarily through tubes bursting, if used in high pressure applications or during pressure spikes occurring in otherwise low pressure applications.

According to the present invention there is provided heat transfer apparatus comprising a tubular means adapted for flow of fluid therethrough, means located within the tubular means to interrupt laminar flow of the fluid, and means located externally of the tubular means to assist in transfer therefrom of heat exchanged between the fluid and the tubular means, the latter, the interrupting means and the external transfer means being formed of substantially the same material and having substantially uninterrupted molecular bonds therebetween.

Preferably the material is a relatively lightweight material, for example a metal, preferably aluminium. The molecular bonding is preferably effected by brazing, preferably in a single operation.

The tubular means preferably comprises a tubular member of circular cross-section for containment of relatively high internal fluid pressures, for example fluid pressures above about 35 bar, such as in the range 35 to 100 bar (3.5 to 10.0 MPa, or about 510 psi to 1,400 psi).

The interrupting means may have the form of a wire which is formed with loops and which may be helically wound on a central support. The external transfer means may have the form of fins, which may extend transversely of the axis of the tubular member, and may be planar, and the fins may be in a spaced parallel relation.

The apparatus may comprise a plurality of the tubular members in a spaced relation, in which case the external transfer means, for example the fins, may be common to the tubular members. Each tubular member may have one end in communication with a common fluid inlet, and the other end in communication with a common fluid outlet.

An embodiment of the present invention will now be described by way of example only, with reference to the accompanying drawings, in which:-
Fig. 1 is a front view of a heat transfer apparatus according to the invention;
Fig. 2 is an end view of the apparatus of Fig. 1;
Fig. 3 shows part of a front view similar to Fig. 1 but in partial cross-section; and
Fig. 4 is an end view of the part of Fig. 3.

Referring to the drawings, a heat transfer apparatus comprises a plurality of heat exchange tubes 10 arranged in a spaced parallel relation and extending between an inlet manifold 12 and an outlet manifold 14. The tubes 10 locate through a plurality of heat exchange fins 16 in the form of plates which extend transversely of the axes of the tubes 10 in a closely spaced parallel relation. The heat exchanger is arranged for high pressure applications such as pressures in excess of about 35 bar, for instance in the range of 35 to 100 bar (3.5 to 10.0 MPa, or about 510 psi to 1,400 psi). Preferably the exchanger should be capable of working at much higher pressures, such as 280 bar or above (28.0 MPa or about 4,000 psi). In particular, the tubes 10 are circular in cross-section.

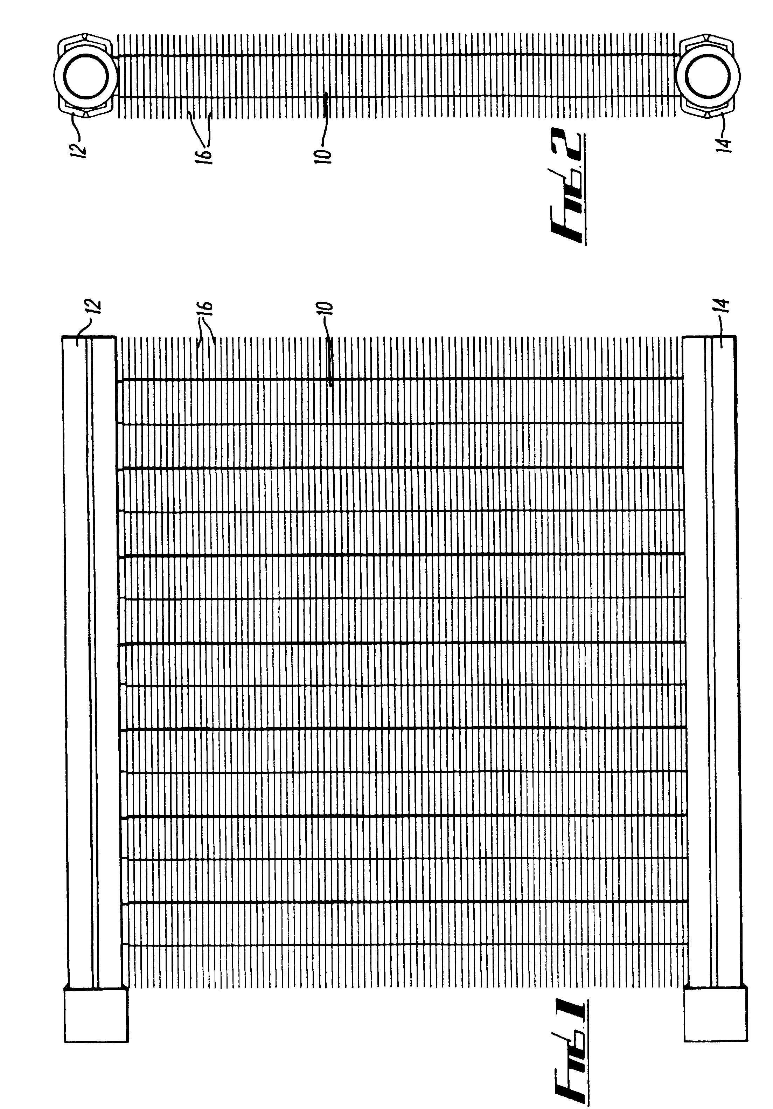

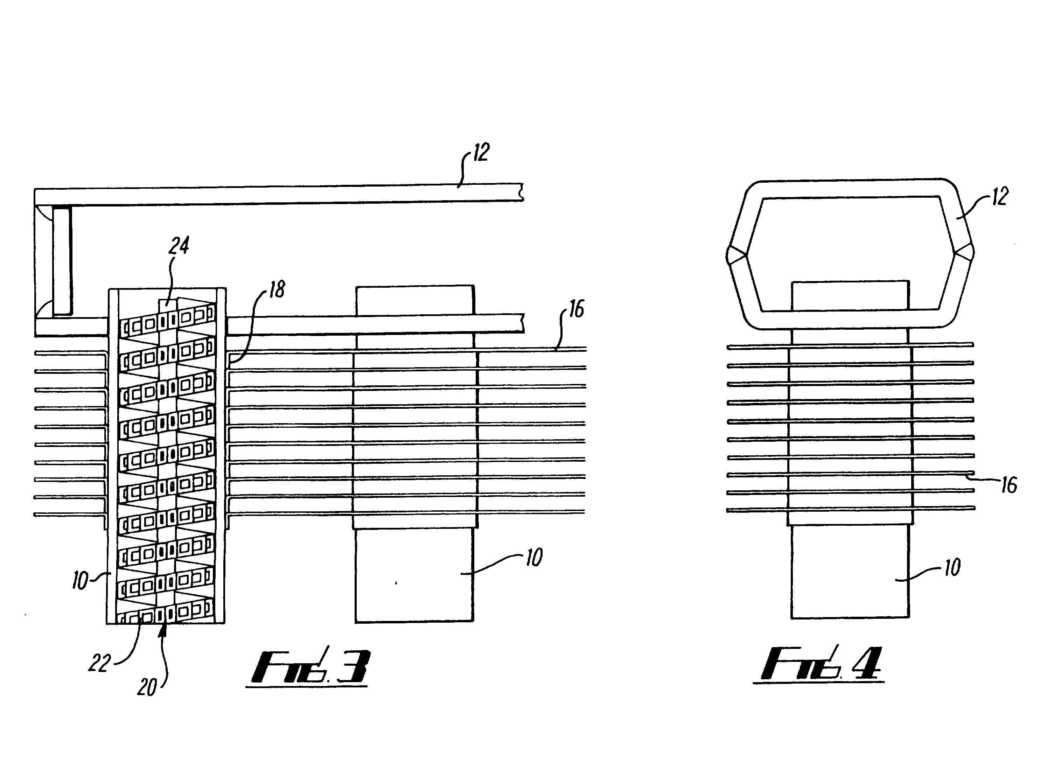

As shown in Fig. 3, each of the fins 16 (preferably corrugated although this is not shown in the drawings) is formed with a through aperture at the location of each of the tubes 10, with an annular neck 18 defining the respective aperture and being used to connect the fins 16 to the tubes 10 as hereinafter described.

Within each tube 10 there is provided a turbulator 20 in the form of a metal wire 22 formed into loops, shown helically wound onto an optional central support rod 24. The turbulator 20 physically prevents laminar flow of the oil within the tube 10 and ensures that hot oil is constantly presented to the cool wall of the tube 10 so that optimum heat transfer can take place.

Each tube 10 is formed of aluminium, as are the rod 24 and wire 22 of the turbulator 20, the fins 16 and the manifolds 12,14. (The manifolds may be formed as two semi-cylindrical parts, in which case the following references to attachment to the manifolds are to attachment to one half of the manifold, the other half being fitted later, for instance by brazing or welding). To achieve molecular bonding between each of these components, fusing of the aluminium is effected by a single brazing operation. The brazing operation may use non-corrosive flux such as a potassium fluo-aluminate flux which prevents oxidation but disperses during the brazing process to leave substantially no residue. This uses heat to soften (or melt) the adjacent aluminium surfaces and allow them to fuse. The result is a continuous aluminium structure substantially without boundaries which could inhibit heat flow. The use of a relatively lightweight material such as aluminium with a single brazing operation is extremely cost effective and enables manufacture of a heat exchanger which has considerable savings in both manufacturing cost and weight relative to conventional exchangers for high pressure operation.

It will be appreciated that the invention may find application in configurations of heat exchangers other than that as described and shown. For example, each heat exchange tube may have an individual arrangement of external fins, and the heat exchange tubes can be formed into various curved shapes. Externally, each tube may be formed with other than fins, for example strips of aluminium helically wound onto the tube. The internal turbulator and the external aluminium loops, where provided, can be varied in density and spacing to provide the best compromise between the thermal performance and pressure drop for any given circumstances.

The brazing technique has been described as providing a molecular bond without introducing other materials at boundaries, but it may be possible, for some applications, to use other techniques, including techniques which introduce other material. However, the ability to provide a continuous transition across component boundaries (and therefore uninterrupted molecular bonds therebetween), by avoiding the introduction of other materials, is considered an important advantage of the arrangement described, in view of the improved thermal conduction properties which result.

Various modifications may be made without departing from the invention. For example lightweight materials other than aluminium may be used, the turbulator may be of other designs, and the external fins may be planar as shown in the drawings or have corrugations as mentioned.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Heat transfer apparatus comprising a tubular means adapted for flow of fluid therethrough, means located within the tubular means to interrupt laminar flow of the fluid, and means located externally of the tubular means to assist in transfer therefrom of heat exchanged between the fluid and the tubular means, and wherein the tubular means, the interrupting means and the external transfer means are formed of substantially the same material and have substantially uninterrupted molecular bonds therebetween.

2. Apparatus according to claim 1, wherein the material is a relatively lightweight material.

3. Apparatus according to claim 1 or claim 2, wherein the material is metal.

4. Apparatus according to claim 3, wherein the material is aluminium.

5. Apparatus according to any preceding claim, wherein the molecular bonding is effected by brazing.

6. Apparatus according to any preceding claim, wherein the molecular bonding is effected in a single operation.

7. Apparatus according to any preceding claim, wherein the tubular means comprises a tubular member of circular cross-section for containment of relatively high internal fluid pressures.

8. Apparatus according to claim 7, wherein the tubular means is capable of containing fluid pressures above about 35 bar.

9. Apparatus according to claim 8, wherein the tubular means is capable of containing pressures in the range from about 35 to about 100 bar (about 3.5 to 10.0 MPa, or about 510 psi to 1,400 psi).

10. Apparatus according to any preceding claim, wherein the interrupting means have the form of a wire which is formed with loops.

11. Apparatus according to claim 10, wherein the wire is helically wound.

12. Apparatus according to any preceding claim, wherein the external transfer means have the form of fins.

13. Apparatus according to claim 12, wherein the fins extend transversely of the axis of the tubular member.

14. Apparatus according to claim 12 or 13, wherein the fins are planar.

15. Apparatus according to claim 12, 13 or 14, wherein the fins are in a spaced parallel relation.

16. Apparatus according to any preceding claim, and comprising a plurality of tubular members in a spaced relation.

17. Apparatus according to claim 16, wherein the external transfer means are common to the tubular members.

18. Apparatus according to claim 16 or 17, wherein each tubular member has one end in communication with a common fluid inlet, and the other end in communication with a common fluid outlet.

19. A method of manufacturing heat transfer apparatus comprising a tubular means adapted for fluid flow therethrough, means located within the tubular means to interrupt laminar flow of the fluid, and means located externally of the tubular means to assist in transfer therefrom of heat exchanged between the fluid and the tubular means, wherein the tubular means, the interrupting means and the external transfer means are formed of substantially the same material, and substantially uninterrupted molecular bonds are formed therebetween.

20. A method according to claim 19, wherein the material is relatively lightweight.

21. A method according to claim 19 or 20, wherein the material is metal.

22. A method according to claim 21, wherein the metal is aluminium.

23. A method according to any of claims 19 to 22, wherein molecular bonding is effected by brazing.

24. A method according to claim 23, wherein molecular bonding is effected in a single operation.

25. A method according to any of claims 23 or 24, wherein the brazing operation uses flux which disperses during brazing, to leave substantially no residue.

26. A method according to claim 25, wherein the flux prevents oscillation during brazing.

27. A method according to claim 25 or 26, wherein the flux is non-corrosive.

28. A method according to claim 25, 26 or 27, wherein the flux is potassium fluo-aluminate flux.

29. Any novel subject matter or combination including novel subject matter disclosed, whether or not within the scope of or relating to the same invention as any of the preceding claims.
